# EUROPEAN PATENT SPECIFICATION

(11) **EP 3 542 093 B1**
(45) Date of publication and mention of the grant of the patent: **01.12.2021**
(21) Application number: 17825976.8
(22) Date of filing: 05.10.2017
(51) Int. Cl.: F16L 55/115, G01M 3/02

(54) **HYDRAULIC CLOSURE DEVICE AND HYDRAULIC AND MEASURING TEST APPARATUS USING SAID HYDRAULIC CLOSURE DEVICE**
HYDRAULISCHE VERSCHLUSSVORRICHTUNG UND HYDRAULISCHE UND MESSTESTVORRICHTUNG UNTER VERWENDUNG DIESER HYDRAULISCHEN VERSCHLUSSVORRICHTUNG
DISPOSITIF DE FERMETURE HYDRAULIQUE ET APPAREIL D'ESSAI HYDRAULIQUE ET DE MESURE UTILISANT LEDIT DISPOSITIF DE FERMETURE HYDRAULIQUE

(30) Priority: 16.11.2016 IT 201600115925
(43) Date of publication of application: 25.09.2019
(73) Proprietor: Walter Tosto S.p.A., 66100 Chieti Scalo (CH) (IT)
(72) Inventor: FEBBO, Dino, 66100 Chieti Scalo (CH) (IT)
(74) Representative: Tiburzi, Andrea
(86) International application number: PCT/IT2017/000215
(87) International publication number: WO 2018/092165

(56) References cited:
- EP-A1- 0 103 777
- WO-A1-2011/106894
- US-A1- 2015 362 114

## Description

The present invention relates to a hydraulic closure device and hydraulic and measuring test apparatus using said hydraulic closure device.

More specifically, the invention concerns a device and apparatus of said type, designed and realized in particular to carry out hydraulic pipe seal tests, used in particular in pressure equipment and heat exchangers in general, but which can be used for any pipe that needs to undergo tests and pressure operation measures.

In the following, the description will be directed to the use of pipes for heat exchangers, but it is clear that the same should not be considered limited to this specific use.

The document US 2015/0362114 A shows a hydraulic closure device according to the preamble of claim 1.

As it is well known there are currently several apparatuses for the preparation of pipe measuring set up. Such apparatuses generally include a pair of closure devices or caps, each welded at the ends of a pipe portion.

Each closure device has a pair of holes. In particular, a first cap includes a hole for inserting a fluid, typically water, and the other hole for connecting a pressure gauge.

The second closing device includes a hole for connecting a tap, for any water outlet, and the other hole for connecting an additional pressure gauge.

The hydraulic test takes place according to operating pressures (even over 300 bar), by measuring the pressure at the ends of the pipe.

A technical problem of the apparatus according to the prior art is that the pipes after the tests are generally damaged, since the caps are welded to the ends of the same so as to withstand the high test pressures they are subjected to. This involves the deformation of such pipes or the thinning of the walls thereof.

It is obvious that this procedure is costly in both economic and technical terms.

In the light of the above, it is an object of the present invention to propose a closure device and related pipe hydraulic test and measurement apparatus, which should not be welded to the end of the pipe for testing.

It is therefore a specific object of the present invention a hydraulic closure device according to claim 1.

Still according to the invention, said vice may comprise a pair of jaws that can be clamped by means of bolts.

Further according to the invention, said second portion of said reaction bush has a groove and said jaws may be internally shaped so as to engage in a complementary way with said groove of said second portion of said reaction bush.

Advantageously according to the invention, said device may comprise a spacer, having a stop, arranged between said at least one locking assembly and said plug, and one or more gaskets, arranged between said plug and said stop of said spacer.

Always according to the invention, said plug may comprise a flange having a radius greater than the pipe to be tested, said at least one gasket being adapted to be arranged between said flange and said pipe to be tested, said peripheral through holes of said plug being obtained on said flange.

Still according to the invention, said device may comprise two locking assemblies.

Further according to the invention, said at least one locking assembly may comprise a pair of inner double tapered rings coupled by a plurality of tightening screws.

It is further object of the present invention a measuring test apparatus for a pipe to be tested comprising a first and a second hydraulic closure device as defined above, said first closure hydraulic device being fixable to a first end of said pipe to be tested and said second hydraulic closure device being fixable to a second end of said pipe to be tested, a first pressure gauge, connected to the first threaded hole of said first hydraulic closure device, a second pressure gauge, connected to the first threaded hole of said second hydraulic closure device, said second threaded hole of said first closure hydraulic device being intended for the connection to an inlet of a fluid to be compressed, and said second threaded hole of said second hydraulic closure device being intended for the connection of a tap for the air outlet in the filling phase and of said fluid to be compressed when the test is completed.

The present invention will be now described, for illustrative but not limitative purposes, according to its preferred embodiments, with particular reference to the figures of the enclosed drawings, wherein:
figure 1 shows a side view of a hydraulic and measuring test apparatus according to the present invention applied to a pipe;
figure 2 shows a front view of the apparatus according to figure 1;
figure 3 shows a perspective view of the apparatus according to figure 1;
figure 4 shows an exploded perspective view of a closure device according to the present invention;
figure 5 shows a section of a sectional view of an installed hydraulic closing device; and
figure 6 shows a longitudinal section of a locking assembly.

In the various figures, similar parts will be indicated by the same reference numbers.

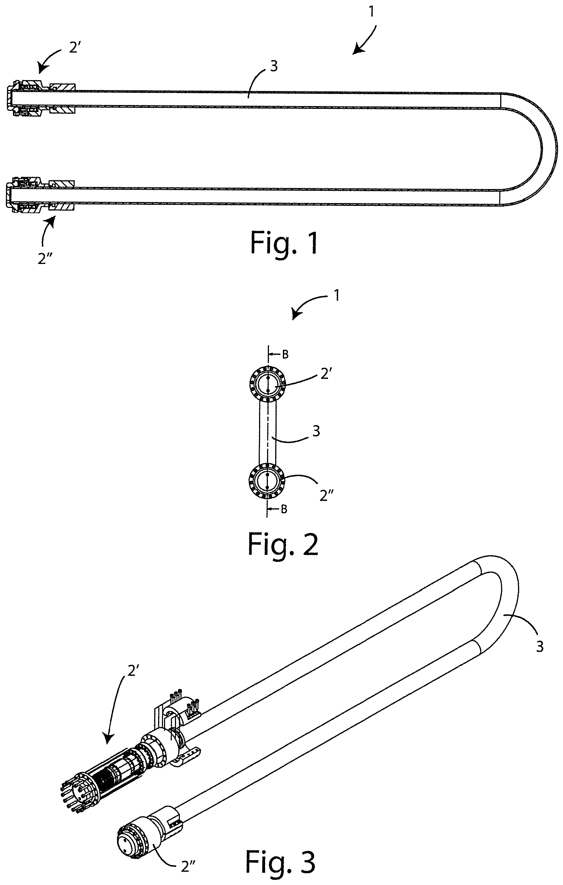

Referring to figures 1-3, a hydraulic and measuring test apparatus 1 according to the present invention can be observed.

The hydraulic and measuring test apparatus 1 essentially comprises hydraulic closing devices 2, and in particular a first and a second hydraulic device 2' and 2", fixed to the ends of a pipe 3.

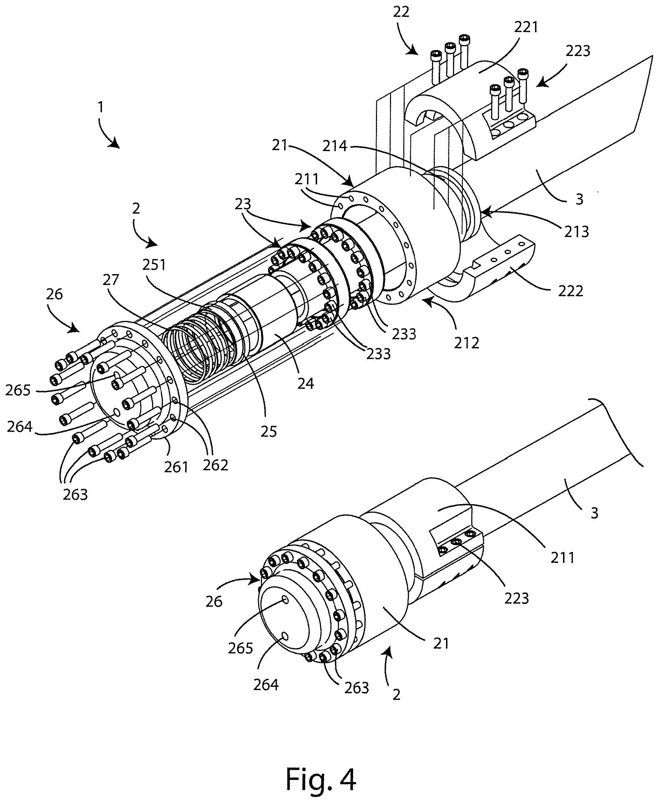

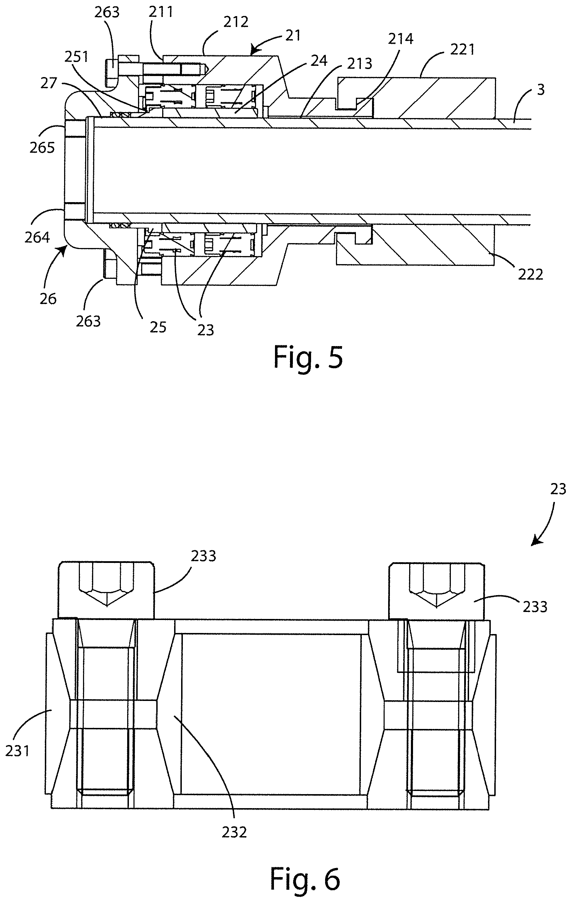

In particular, referring to figures 4 and 5, a closure device 2 according to the invention can be observed, as applied to the end of a pipe to be tested 3.

The closure device 2 comprises a reaction bush 21 through which, in use, the test pipe 3 is inserted, having a plurality of threaded holes 211 on the edge.

The reaction bush 21 comprises a first portion 212 and a second portion 213 having a groove 214.

The closure device 2 also includes a clamp 22 comprising a pair of jaws 221 and 222 and bolts 223 for clamping said jaws 221 and 222.

Said jaws 221 and 222 are internally shaped to engage, in a complementary manner, with said groove 214 of said second portion 213 of said reaction bush 21.

The closure device 2 also includes a pair of known locking assemblies 23, in which the pipe 3 to be tested can be inserted.

Each one of the locking assemblies 23 is arranged between said reaction bush 21 and a further protection bush 24. In the latter, the pipe to be tested 3 is inserted.

Referring also to figure 6, the longitudinal section of a locking assembly 23 is seen, which comprises a pair of double-conical concentric rings 231 and 232 joined by a series of tightening screws 233. By tightening the tightening screws 233, there is the clamping of the double conical ring 232 on the bush 24 and then on the pipe to be tested 3, and the tightening of the double conical ring 232 on the inner surface of the reaction bush 21, i.e. the one facing on the external surface of said pipe to be tested 3.

The closure device 2 also comprises a spacer 25 having a stop 251 and a plug 26, in which the edge of the pipe to be tested is inserted for a tract. Said plug 26 comprises a flange 261 having a radius larger than the pipe to be tested 3 and a set of perimetral through holes 262, in which a plurality of locking bolts 263 can be engaged.

Said plug 26 also has on the outer surface a first 264 and a second threaded hole 265, whose function will be better described hereinafter.

Finally, said hydraulic closing device 2 comprises a set of gaskets 27 arranged between said flange 261 of said plug 26 and said stop 251 of said spacer 25.

When the closing hydraulic device 2 is in use on a pipe to be tested 3, the locking bolts 263 engage both with the through holes 262 of said plug 26 and with the threaded holes 211 of said reaction bush 21, compressing the gaskets 27.

The operation of the hydraulic closure device 2 and of the hydraulic and measuring test apparatus 1 described above is as follows.

When a pipe 3 is to be tested, a first and a second hydraulic device 2' and 2" are installed at the ends of said pipe 3 to be tested as shown in figures 1 and 2.

An inlet for the compressed fluid, such as water and the like, is connected to said first threaded hole 264 of said first hydraulic device 2', while a pressure gauge is connected to said second threaded hole 265 of said first hydraulic device 2'.

A tap for the air outlet in the filling step of the fluid to be compressed by said pipe 3 to be tested at the end of the test is connected to said first threaded hole 264 of said second hydraulic device 2", while a second pressure gauge is connected to said second hydraulic device 2".

The hydraulic closing devices 2 allow the inlet/outlet of the fluid to be compressed, the pressure control and the air discharge.

The locking assemblies 23 create radial forces, blocking a reaction bush 21 and the protecytion bush 24.

The clamp 22 provides additional radial forces to the reaction bush 21 and the clamping bolts 263 compress the gaskets 27 against the spacer 25 on the bush 24 by means of the plug 26, ensuring the perfect seal and resisting the axial thrusts exerted by the fluid under pressure.

An advantage of the hydraulic and measuring test apparatus according to the present invention is to allow the closure of one end of a pipe to be tested without necessarily carry out a welding, but by means of wedge-shaped systems and elastomeric gaskets, to allow the pressurizing of this pipe to be tested beyond the 300 bars, thus providing a non-invasive tool for easy to be assembled and disassembled.

The present invention has been described for illustrative but not limitative purposes, according to its preferred embodiments, but it is to be understood that modifications and/or changes can be introduced by those skilled in the art without departing from the scope as defined in the enclosed claims.

## Claims

1. Hydraulic closure device (2) for a pipe to be tested (3) comprising
a reaction bush (21), through which the pipe to be tested (3) is insertable, having a plurality of threaded holes (211) on an edge,
a vice (22) for fixing said reaction bush (21) to said pipe to be tested (3), and
at least one locking assembly (23) arranged in use between said reaction bush (21) and said pipe (3), said at least one locking assembly (23) being adapted to exert a radial force, so as to block the position of said reaction bush (21) and of said pipe to be tested (3),
a plug (26) for closing the end of said pipe to be tested (3) having a plurality of perimetral through holes (262), said plug (26) having a first (264) and a second (265) threaded hole on the outer surface, and
a plurality of locking bolts (263) engaged in said perimetral through holes (262) of said plug (26) and in said plurality of threaded holes (211) on the edge of said reaction bush (21),
said hydraulic closure device (2) being **characterized**
**in that** said reaction bush (21) comprises a first portion (212), having an inner
diameter larger than the pipe to be tested (3) on which it is applicable, and a second portion (213), having an inner diameter substantially equal to that of the pipe to be tested (3) on which it is applicable, having a groove (214) and
**in that** said device (2) further comprises a protection bush (24), intended to be arranged between said pipe to be tested (3) and said at least one locking assembly (23).

2. Hydraulic closure device (2) according to claim 1, **characterized in that** said vice (22) comprises a pair of jaws (221, 222) that can be clamped by means of bolts (223).

3. Hydraulic closure device (2) according to claim 2, **characterized in that** said jaws (221, 222) are internally shaped so as to engage in a complementary way with said groove (214) of said second portion (213) of said reaction bush (21).

4. Hydraulic closure device (2) according to any one of the preceding claims, **characterized in that** it comprises a spacer (25), having a stop (251), arranged between said at least one locking assembly (23) and said plug (26), and one or more gaskets (27), arranged between said plug (26) and said stop (251) of said spacer (25).

5. Hydraulic closure device (2) according to claim 4, **characterized in that** said plug (26) comprises a flange (261) having a radius greater than the pipe to be tested (3), said at least one gasket (27) being adapted to be arranged between said flange (261) and said pipe to be tested (3), said perimetral through holes (262) of said plug (26) being obtained on said flange (261).

6. Hydraulic closure device (2) according to any one of the preceding claims, **characterized in that** it comprises two locking assemblies (23).

7. Hydraulic closure device (2) according to any one of the preceding claims, **characterized in that** said at least one locking assembly (23) comprises a pair of inner double tapered rings (231, 232) coupled by a plurality of tightening screws (233).

8. Hydraulic and measuring test apparatus (1) for a pipe to be tested (3) comprising
a first (2') and a second (2") hydraulic closure device according to any one of claims 1-7,
said first closure hydraulic device (2') being fixable to a first end of said pipe to be tested (3) and said second hydraulic closure device (2") being fixable to a second end of said pipe to be tested (3),
a first pressure gauge, connected to the first threaded hole (264) of said first hydraulic closure device (2'),
a second pressure gauge, connected to the first threaded hole (264) of said second hydraulic closure device (2"),
said second threaded hole (265) of said first closure hydraulic device (2') being intended for the connection to an inlet of a fluid to be compressed, and
said second threaded hole (265) of said second hydraulic closure device (2") being intended for the connection of a tap for the air outlet in the filling phase and of said fluid to be compressed when the test is completed.

## Patentansprüche

1. Hydraulische Schließvorrichtung (2) für ein zu prüfendes Rohr (3), umfassend
eine Reaktionsbuchse (21), durch die das zu prüfende Rohr (3) einführbar ist und die an einem Rand eine Vielzahl von Gewindelöchern (211) aufweist,
eine Schraubzwinge (22) zum Befestigen der Reaktionsbuchse (21) an dem zu prüfenden Rohr (3) und
wenigstens eine Verriegelungsanordnung (23), die im Gebrauch zwischen der Reaktionsbuchse (21) und dem Rohr (3) angeordnet ist, wobei die wenigstens eine Verriegelungsanordnung (23) dazu angepasst ist, eine radiale Kraft auszuüben, um die Position der Reaktionsbuchse (21) und des zu prüfenden Rohrs (3) zu arretieren,
einen Stopfen (26) zum Verschließen des Endes des zu prüfenden Rohrs (3), der eine Vielzahl von Umfangsdurchgangslöchern (262) aufweist, wobei der Stopfen (26) ein erstes (264) und ein zweites (265) Gewindeloch an der Außenfläche aufweist, und
eine Vielzahl von Verriegelungsbolzen (263), die in die Umfangsdurchgangslöcher (262) des Stopfens (26) und in die Vielzahl von Gewindelöchern (211) an dem Rand der Reaktionsbuchse (21) eingreifen,
wobei die hydraulische Schließvorrichtung (2) **dadurch gekennzeichnet ist,**
**dass** die Reaktionsbuchse (21) einen ersten Teil (212) mit einem größeren Innendurchmesser als das zu prüfende Rohr (3), auf das er applizierbar ist, und einen zweiten Teil (213) mit einem Innendurchmesser, der im Wesentlichen gleich dem des zu prüfenden Rohrs (3) ist, auf das er applizierbar ist, der eine Nut (214) aufweist, umfasst und
**dass** die Vorrichtung (2) weiter eine Schutzbuchse (24) umfasst, die dazu bestimmt ist, zwischen dem zu prüfenden Rohr (3) und der wenigstens einen Verriegelungsanordnung (23) angeordnet zu sein.

2. Hydraulische Schließvorrichtung (2) nach Anspruch 1, **dadurch gekennzeichnet, dass** die Schraubzwinge (22) ein Paar Backen (221, 222) umfasst, das mittels Bolzen (223) festgeklemmt werden kann.

3. Hydraulische Schließvorrichtung (2) nach Anspruch 2, **dadurch gekennzeichnet, dass** die Backen (221, 222) innen so geformt sind, dass sie komplementär in die Nut (214) des zweiten Teils (213) der Reaktionsbuchse (21) eingreifen.

4. Hydraulische Schließvorrichtung (2) nach einem der vorstehenden Ansprüche, **dadurch gekennzeichnet, dass** sie einen Abstandshalter (25) mit einem Anschlag (251), der zwischen der wenigstens einen Verriegelungsanordnung (23) und dem Stopfen (26) angeordnet ist, und eine oder mehrere Dichtungen (27), die zwischen dem Stopfen (26) und dem Anschlag (251) des Abstandshalters (25) angeordnet sind, umfasst.

5. Hydraulische Schließvorrichtung (2) nach Anspruch 4, **dadurch gekennzeichnet, dass** der Stopfen (26) einen Flansch (261) umfasst, dessen Radius größer als der des zu prüfenden Rohrs (3) ist, wobei die wenigstens eine Dichtung (27) dazu angepasst ist, zwischen dem Flansch (261) und dem zu prüfenden Rohr (3) angeordnet zu sein, wobei die Umfangsdurchgangslöcher (262) des Stopfens (26) auf dem Flansch (261) erhalten sind.

6. Hydraulische Schließvorrichtung (2) nach einem der vorstehenden Ansprüche, **dadurch gekennzeichnet, dass** sie zwei Verriegelungsanordnungen (23) umfasst.

7. Hydraulische Schließvorrichtung (2) nach einem der vorstehenden Ansprüche, **dadurch gekennzeichnet, dass** die wenigstens eine Verriegelungsanordnung (23) ein Paar innere Doppelkegelringe (231, 232) umfasst, die durch eine Vielzahl von Spannschrauben (233) verkoppelt sind.

8. Hydraulische und messende Prüfeinrichtung (1) für ein zu prüfendes Rohr (3), umfassend
eine erste (2') und eine zweite (2") hydraulische Schließvorrichtung nach einem der Ansprüche 1 bis 7, wobei die erste hydraulische Schließvorrichtung (2') an einem ersten Ende des zu prüfenden Rohrs (3) befestigbar ist und die zweite hydraulische Schließvorrichtung (2") an einem zweiten Ende des zu prüfenden Rohrs (3) befestigbar ist,
ein erstes Manometer, das mit dem ersten Gewindeloch (264) der ersten hydraulischen Schließvorrichtung (2') verbunden ist,
ein zweites Manometer, das mit dem ersten Gewindeloch (264) der zweiten hydraulischen Schließvorrichtung (2") verbunden ist,
wobei das zweite Gewindeloch (265) der ersten hydraulischen Schließvorrichtung (2') für den Anschluss an einen Einlass eines zu komprimierenden Fluids vorgesehen ist, und
wobei das zweite Gewindeloch (265) der zweiten hydraulischen Schließvorrichtung (2") für den Anschluss eines Hahns für den Luftauslass in der Füllphase und des zu komprimierenden Fluids nach Abschluss der Prüfung vorgesehen ist.

## Revendications

1. Dispositif de fermeture hydraulique (2) d'une conduite à tester (3) comprenant
une douille de réaction (21), à travers laquelle la conduite à tester (3) peut être insérée, présentant une pluralité de trous taraudés (211) sur un bord,
un étau (22) permettant de fixer ladite douille de réaction (21) à ladite conduite à tester (3), et
au moins un ensemble de verrouillage (23) agencé, en utilisation, entre ladite douille de réaction (21) et ladite conduite (3), ledit au moins un ensemble de verrouillage (23) étant adapté pour exercer une force radiale, de manière à bloquer la position de ladite douille de réaction (21) et de ladite conduite à tester (3),
un bouchon (26) servant à fermer l'extrémité de ladite conduite à tester (3) présentant une pluralité de trous traversants périmétriques (262), ledit bouchon (26) présentant un premier (264) et second (265) trou taraudé sur la surface extérieure, et
une pluralité de boulons de verrouillage (263) mis en prise dans lesdits trous traversants périmétriques (262) dudit bouchon (26) et dans ladite pluralité de trous taraudés (211) sur le bord de ladite douille de réaction (21),
ledit dispositif de fermeture hydraulique (2) étant **caractérisé**
**en ce que** ladite douille de réaction (21) comprend une première partie (212), présentant un diamètre intérieur plus grand que la conduite à tester (3) sur laquelle il peut être appliqué, et une seconde partie (213), présentant un diamètre intérieur sensiblement égal à celui de la conduite à tester (3) sur laquelle il peut être appliqué, présentant une rainure (214) et
**en ce que** ledit dispositif (2) comprend en outre une douille de protection (24), destinée à être agencée entre ladite conduite à tester (3) et ledit au moins un ensemble de verrouillage (23).

2. Dispositif de fermeture hydraulique (2) selon la revendication 1, **caractérisé en ce que** ledit étau (22) comprend une paire de mâchoires (221, 222) qui peuvent être serrées au moyen de boulons (223).

3. Dispositif de fermeture hydraulique (2) selon la revendication 2, **caractérisé en ce que** lesdites mâchoires (221, 222) sont mises en forme intérieurement pour venir en prise de manière complémentaire avec ladite rainure (214) de ladite seconde partie (213) de ladite douille de réaction (21).

4. Dispositif de fermeture hydraulique (2) selon l'une quelconque des revendications précédentes, **caractérisé en ce qu'**il comprend une entretoise (25), présentant une butée (251), agencée entre ledit au moins un ensemble de verrouillage (23) et ledit bouchon (26), et un ou plusieurs joints (27), agencés entre ledit bouchon (26) et ladite butée (251) de ladite entretoise (25).

5. Dispositif de fermeture hydraulique (2) selon la revendication 4, **caractérisé en ce que** ledit bouchon (26) comprend une bride (261) présentant un rayon supérieur à la conduite à tester (3), ledit au moins un joint (27) étant adapté pour être agencé entre ladite bride (261) et ladite conduite à tester (3), lesdits trous traversants périmétriques (262) dudit bouchon (26) étant obtenus sur ladite bride (261).

6. Dispositif de fermeture hydraulique (2) selon l'une quelconque des revendications précédentes, **caractérisé en ce qu'**il comprend deux ensembles de verrouillage (23).

7. Dispositif de fermeture hydraulique (2) selon l'une quelconque des revendications précédentes, et en ce que ledit au moins un ensemble de verrouillage (23) comprend une paire de bagues coniques internes doubles (231, 232) couplées par l'intermédiaire d'une pluralité de vis de serrage (233).

8. Appareil de test hydraulique et de mesure (1) d'une conduite à tester (3) comprenant
un premier (2') et un second (2") dispositif de fermeture hydraulique selon l'une quelconque des revendications 1-7, ledit premier dispositif de fermeture hydraulique (2') pouvant être fixé à une première extrémité de ladite conduite à tester (3) et ledit second dispositif de fermeture hydraulique (2") pouvant être fixé à une seconde extrémité de ladite conduite à tester (3),
une première jauge de pression, connectée au premier trou taraudé (264) dudit premier dispositif de fermeture hydraulique (2'),
une seconde jauge de pression, connectée au premier trou taraudé (264) dudit second dispositif de fermeture hydraulique (2"),
ledit second trou taraudé (265) dudit premier dispositif de fermeture hydraulique (2') étant destiné à la connexion à une entrée d'un fluide à comprimer, et
ledit second trou taraudé (265) dudit second dispositif de fermeture hydraulique (2") étant destiné à la connexion d'un robinet pour la sortie d'air dans la phase de remplissage et dudit fluide à comprimer lorsque le test est terminé.
